(19) Europäisches Patentamt
European Patent Office
Office européen des brevets

(11) EP 4 205 867 A1

(12) **EUROPEAN PATENT APPLICATION**
published in accordance with Art. 153(4) EPC

(43) Date of publication:
**05.07.2023 Bulletin 2023/27**

(21) Application number: **21861471.7**

(22) Date of filing: **23.08.2021**

(51) International Patent Classification (IPC):
***B05D 5/00*** *(2006.01)* ***B05D 7/24*** *(2006.01)*
***C09D 163/00*** *(2006.01)* ***C09D 183/00*** *(2006.01)*
***C09D 7/61*** *(2018.01)* ***C09D 7/63*** *(2018.01)*

(52) Cooperative Patent Classification (CPC):
**B05D 5/00; B05D 7/24; C09D 7/61; C09D 7/63; C09D 163/00; C09D 183/00**

(86) International application number:
**PCT/JP2021/030737**

(87) International publication number:
**WO 2022/045045 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.08.2020 JP 2020144927**

(71) Applicant: **Chugoku Marine Paints, Ltd.**
**Hiroshima 739-0652 (JP)**

(72) Inventor: **KODAMA Shinsho**
**Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

(54) **PAINT COMPOSITION, COATING FILM, BASE MATERIAL WITH COATING FILM, AND METHOD FOR MANUFACTURING SAME**

(57) An embodiment of the present invention relates to a coating composition, a coating film, a substrate with a coating film, or a production method therefor. This coating composition includes an epoxy resin (A), a silicone resin (B), aluminum (C), and an amine curing agent (D).

EP 4 205 867 A1

## Description

Technical Field

An embodiment of the present invention relates to a coating composition, a coating film, a substrate with a coating film, or a production method therefor.

Background Art

Examples of a substrate that requires anticorrosion property include a substrate that can be exposed to high temperatures (e.g., 200°C). Examples of such a substrate include a steam pipe of a ship, in which pipe the temperature may rise to about 200°C.

It is impossible to use, as such a substrate that can be exposed to high temperatures, an epoxy resin coating composition that excels in anticorrosion property but has a heat-resistant temperature of about 150°C. So far, silicone resin coating compositions having excellent heat resistance, such as the heat-resistant coating composition described in Patent Literature 1, have been used.

Citation List

Patent Literature

Patent Literature 1: JP 2019-6982 A

Summary of Invention

Technical Problem

It is often difficult to heat and dry (bake) the coating composition itself applied to a substrate such as a steam pipe of a ship. Usually, when a coating film was formed, heating, for example, was not performed. The coating film was formed at room temperature, and then cured by increasing the temperature due to subsequent use of the substrate. However, the silicone resin heat-resistant coating composition as described above generally requires a temperature of 250°C or higher for complete curing. Accordingly, in a substrate such as a steam pipe of a ship, in which pipe the temperature rises only up to about 200°C, the applied composition is not completely cured. Therefore, it has been found that there is a room for improvement in anticorrosion property of a coating film to be formed.

Further, in order to obtain a coating film with excellent long-term anticorrosion property, the dry film thickness thereof is required to be 100 μm or more. However, it is uneasy to form a coating film with such a film thickness by one coating application. Thus, usually, the coating film forming step is repeated multiple times (preferably twice) (hereinafter, also referred to as "multiple coating applications") while the coating application and drying of the coating composition is provided as one coating film forming step. Then, a coating film with such a thick film thickness is formed.

In order to improve the anticorrosion property of a coating film formed from the silicone resin heat-resistant coating composition as described above, it is somehow conceivable that an organic component having excellent anticorrosion property is blended. However, organic components are generally poor in heat resistance. Thus, in the case of exposure to a high temperature, carbonization, for example, occurs, and it can be easily assumed that deterioration of coating film properties and a change in the state of the coating film or the hue of the coating film cannot be suppressed.

Further, an organic component may be blended as described above. In this case, the silicone resin is an inorganic resin. Thus, when the organic component is used in combination with the silicone resin, the compatibility is significantly poor. As described above, it has been found that there is a problem in adhesion between coating films formed in the case of multiple coating applications (hereinafter, also referred to as "interlayer adhesion") as described above.

An embodiment of the present invention provides a coating composition capable of forming a coating film with excellent heat resistance, anticorrosion property, and interlayer adhesion even by curing at room temperature.

Solution to Problem

The present inventors have conducted intensive research on a solution to the problem and as a result, have found that the problem can be solved by using an example with the following configuration. Then, the present invention has been completed.

The configuration examples of the present invention are as follows.

<1> A coating composition including: an epoxy resin (A); a silicone resin (B); aluminum (C); and an amine curing agent (D).
<2> The coating composition according to <1>, further including a silane coupling agent.
<3> The coating composition according to <1> or <2>, which is a heat-resistant coating composition.
<4> A coating film formed from the coating composition according to any one of <1> to <3>.
<5> A substrate with a coating film, including a substrate and the coating film according to <4>.
<6> A method for producing a substrate with a coating film, including the following steps [1] and [2]:

the step [1] of applying the coating composition according to any one of <1> to <3> to a substrate; and
the step [2] of drying the coating composition applied on the substrate to form a coating film.

Advantageous Effects of Invention

According to an embodiment of the present invention, a coating film with excellent heat resistance, anticorrosion property, and interlayer adhesion can be formed even by curing at room temperature. In particular, according to an embodiment of the present invention, it is possible to form, by curing at room temperature, a coating film that can suppress deterioration of coating film physical properties, and a change in the state of the coating film and the hue of the coating film, and has excellent heat resistance, anticorrosion property, and adhesion to a substrate, even on a substrate (e.g., a steam pipe of a ship) that can be exposed to a high temperature (e.g., 200°C) and requires anticorrosion property.
An embodiment of the present invention makes it possible to easily form a coating film with excellent long-term anticorrosion property because of excellent adhesion between coating films formed by multiple coating applications so as to form a thick coating film.

Brief Description of Drawing

Fig. 1 is a schematic overview of a test plate with a cut as used in an anticorrosion test of Examples.

Description of Embodiments

<<Coating Compositions

A coating composition according to an embodiment of the present invention (hereinafter, simply referred to as the "present composition") includes an epoxy resin (A), a silicone resin (B), aluminum (C), and an amine curing agent (D) .
When the epoxy resin (A) and the silicone resin (B), which are usually poorly compatible, are contained, delamination is likely to occur between coating film layers formed by multiple coating applications. However, although the present composition contains the epoxy resin (A) and the silicone resin (B), inclusion of the aluminum (C) allows for formation of a coating film with excellent interlayer adhesion. Further, it is possible to form a coating film that hardly deteriorates the physical properties of the coating film and hardly changes the state of the coating film and the hue of the coating film even when exposed to a high temperature (e.g., 200°C) despite inclusion of the epoxy resin (A).
Thus, the present composition is suitably used for a substrate that can be exposed to a high temperature (e.g., 200°C) and requires anticorrosion property. Specifically, the present composition is suitably used for, for example, steam pipes of ships, pipes used for, for instance, petroleum refining or chemical plants, and industrial pipes (e.g., industrial pipes covered with, for instance, a heat insulating material).
In addition, the present composition may be suitably used as a heat-resistant coating composition and/or an anticorrosive coating composition, and may be more suitably used as a heat-resistant anticorrosive coating composition.
The present composition may be a one-component type composition, but is usually a two-component type composition including a base component containing the epoxy compound (A) and a curing agent component containing the amine curing agent (D). If necessary, the present composition may also be a three or more-component type composition.
The base component and the curing agent component are usually, for example, preserved, stored, and transported in separate containers, and then used by being mixed together immediately before use.
Note that the present composition may be diluted with a solvent and used depending on, for example, a coating application process. Each description below is a description before dilution except for dilution-related contents.

<Epoxy Resin (A)>

The epoxy resin (A) is not particularly limited, and conventionally known epoxy resins may be used.
Examples of the epoxy resin (A) include the non-tar epoxy resin described in JP H 11-343454 A or JP H

10-259351 A.

One kind or two or more kinds of the epoxy resin (A) contained in the present composition are acceptable.

Examples of the epoxy resin (A) include: a polymer or oligomer containing two or more epoxy groups in the molecule; or a polymer or oligomer produced by a ring-opening reaction of the epoxy groups. Examples of such an epoxy resin include: a glycidyl ether type epoxy resin, a glycidyl ester type epoxy resin, a glycidyl amine type epoxy resin, a bisphenol type epoxy resin, a novolac type epoxy resin, an aliphatic epoxy resin, an alicyclic epoxy resin, a fatty acid-modified epoxy resin, or an epoxidized oil type epoxy resin.

Among them, a bisphenol type epoxy resin is preferable from the viewpoint of, for example, an ability to easily form a coating film with excellent adhesion to a substrate. Further, a bisphenol A type or bisphenol F type epoxy resin is more preferable, and a bisphenol A type epoxy resin is particularly preferable.

Examples of the epoxy resin (A) include: a bisphenol A type epoxy resin (bisphenol A type diglycidyl ether compounds); a bisphenol AD type epoxy resin; a bisphenol F type epoxy resin; a phenol novolac type epoxy resin; a cresol novolac type epoxy resin; or a trishydroxyphenylmethane type epoxy resin. The epoxy resin (A) may be, for example, a hydrogenation reaction (hereinafter, also referred to as "hydrogenated") product, a fatty acid modified product, or a brominated product in which at least one of hydrogen atoms in the resin is substituted with a bromine atom.

Examples of the bisphenol A type epoxy resin include a condensation polymer of bisphenol A type diglycidyl ether compound (e.g., bisphenol A diglycidyl ether, bisphenol A (poly)propylene oxide diglycidyl ether, bisphenol A (poly)ethylene oxide diglycidyl ether, hydrogenated bisphenol A diglycidyl ether, hydrogenated bisphenol A (poly)propylene oxide diglycidyl ether, hydrogenated bisphenol A (poly)ethylene oxide diglycidyl ether).

The epoxy resin (A) may be obtained by synthesis using a conventionally known method, or may be a commercially available product. Examples of the commercially available product that is liquid at room temperature (a temperature of 15 to 25°C; the same applies to the following) include: "E-028" (a bisphenol A type epoxy resin with an epoxy equivalent of 180 to 190 and a viscosity of 12,000 to 15,000 mPa·s/25°C; manufactured by OHTAKE-MEISHIN CHEMICAL, CO., LTD.); "jER-807" (a bisphenol F type epoxy resin with an epoxy equivalent of 160 to 175 and a viscosity of 3,000 to 4,500 mPa·s/25°C; manufactured by Mitsubishi Chemical Corporation); or "FLEP 60" (with an epoxy equivalent of about 280 and a viscosity of about 17,000 mPa·s/25°C; manufactured by TORAY FINE CHEMICALS CO., LTD.). Examples of the commercially available product that is semi-solid at room temperature include "jER-834" (a bisphenol A type epoxy resin with an epoxy equivalent of 230 to 270; manufactured by Mitsubishi Chemical Corporation). Examples of the commercially available product that is solid at room temperature include: "jER-1001" (a bisphenol A type epoxy resin with an epoxy equivalent of 450 to 500; manufactured by Mitsubishi Chemical Corporation); "JER-1004" (a bisphenol A type epoxy resin with an epoxy equivalent of 875 to 975 and a viscosity of Q to U Gardner-Holdt/25°C; manufactured by Mitsubishi Chemical Corporation); or "1007" (a bisphenol A type epoxy resin with an epoxy equivalent of 1,750 to 2,200 and a viscosity of Y to Z1 Gardner-Holdt/25°C; manufactured by KUKDO CHEMICAL, Inc.).

Also, it is possible to use a solution obtained by diluting the above-mentioned semi-solid or solid epoxy resin with a solvent to prepare a solution. Examples of the commercially available product thereof include: "E-834-85X" (xylene solution containing a bisphenol A type epoxy resin (834-type epoxy resin solution) with an epoxy equivalent of about 300; manufactured by OHTAKE-MEISHIN CHEMICAL, CO., LTD.); or "E-001-75" (xylene solution containing a bisphenol A type epoxy resin (1001-type epoxy resin solution) with an epoxy equivalent of about 630; manufactured by OHTAKE-MEISHIN CHEMICAL, CO., LTD.).

The epoxy equivalent herein refers to an epoxy equivalent of the solid content in the epoxy resin (A).

From the viewpoint of, for example, an ability to easily form a coating film with excellent anticorrosion property, the epoxy equivalent of the epoxy resin (A) is preferably 150 or higher, more preferably 175 or higher, and particularly preferably 200 or higher, and preferably 5,000 or less, more preferably 3,000 or less, and particularly preferably 2,500 or less.

The weight average molecular weight of the solid content in the epoxy resin (A) as measured by GPC (gel permeation chromatography) is not generally determined by coating application curing conditions (e.g., room temperature drying or heating drying) of the composition to be obtained, but is preferably from 350 to 20,000.

From the viewpoint of, for example, an ability to form a coating film with better anticorrosion property, the content of the solid content of the epoxy resin (A) is preferably 1 mass% or larger and more preferably 5 mass% or larger, and preferably 60 mass% or less and more preferably 50 mass% or less based on 100 mass% of the nonvolatile content in the present composition.

In addition, when the present composition is a two-component type composition containing a base component and a curing agent component, the epoxy resin (A) is included in the base component. The content of the solid content of the epoxy resin (A) is preferably 1 mass% or larger and more preferably 5 mass% or larger, and preferably 60 mass% or less and more preferably 50 mass% or less based on 100 mass% of the solid content in the base component.

<Silicone Resin (B)>

The silicone resin (B) is not particularly limited as long as the resin has a siloxane linkage and contains no epoxy group, and may be linear or branched. The silicone resin (B) is also a siloxane binder or a siloxane bonding agent.
One kind or two or more kinds of the silicone resin (B) contained in the present composition are acceptable.
Examples of the silicone resin (B) include a compound having, via a siloxane linkage, a reactive group in the molecule, making high molecular weight or forming a three-dimensional crosslinked structure by reacting the reactive groups with each other and cured.
Examples of the reaction include a condensation reaction or an addition reaction, and examples of the condensation reaction include dehydration or dealcoholization.
The silicone resin (B) is preferably, for example, a compound represented by the following formula (I).

[Chemical Formula 1]

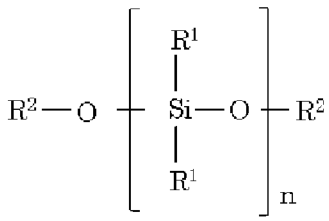

(I)

[In the formula (I), each $R^1$ independently represents a $C_{1-8}$ alkyl group, a $C_{6-8}$ aryl group, or a $C_{1-8}$ alkoxy group; each $R^2$ independently represents a $C_{1-8}$ alkyl group, a $C_{6-8}$ aryl group, or a hydrogen atom; and n represents the number of repetitions.]
Examples of the $C_{1-8}$ alkyl group in $R^1$ or $R^2$ include a methyl group, an ethyl group, a propyl group, a butyl group, or a pentyl group.
The $C_{6-8}$ aryl group in $R^1$ or $R^2$ may be a group having a substituent, such as an alkyl group, on an aromatic ring. Examples thereof include a phenyl group, a methylphenyl group, or a dimethylphenyl group.
Examples of the $C_{1-8}$ alkoxy group in $R^1$ include a methoxy group, an ethoxy group, a propoxy group, or a phenoxy group.
$R^1$ is preferably a methyl group, an ethyl group, a propyl group, or a phenyl group. $R^2$ is preferably a methyl group, an ethyl group, a phenyl group, or a hydrogen atom.
The silicone resin (B) is preferably a heat-resistant resin such as a methyl silicone resin or a methyl phenyl silicone resin, and more preferably contains one or more constituent units selected from the group consisting of a dimethylsiloxane unit (b1), a diphenylsiloxane unit (b2), a monomethylsiloxane unit (b3), a monopropylsiloxane unit (b4), and a monophenylsiloxane unit (b5) as shown below:

[Chemical Formula 2]

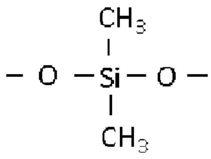
(b 1)

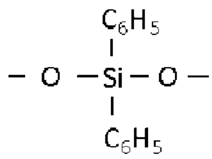
(b 2)

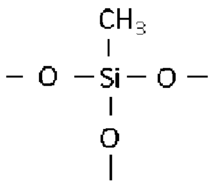
(b 3)

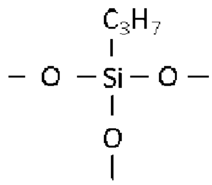
(b 4)

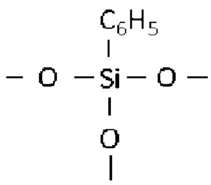
(b 5)

[In the formulas (b1) to (b5), "-" that is bonded to O and is not bonded to Si in Si-O- represents a bond, and Si-O- does not necessarily represent Si-O-CHs.]

The weight average molecular weight (hereinafter, also simply referred to as "Mw".) of the silicone resin (B) in terms of standard polystyrene as measured by GPC (gel permeation chromatography) is preferably 15,000 or larger and more preferably 18,000 or larger, and preferably 1,000,000 or less and more preferably 600,000 or less from the viewpoint of, for example, an ability to easily form a coating film with better heat resistance and anticorrosion property.

The repetition number n is preferably selected so that the Mw of the silicone resin (B) falls within the above-mentioned range.

From the viewpoint of, for example, an ability to easily form a coating film with anticorrosion property, heat resistance, and interlayer adhesion in a good balance, the content of the solid content of the silicone resin (B) is preferably 1 mass% or larger and more preferably 3 mass% or larger, and preferably 60 mass% or less and more preferably 50 mass% or less based on 100 mass% of the nonvolatile content in the present composition.

When the present composition is a two-component type composition containing a base component and a curing agent component, the silicone resin (B) may be included in the base component or the curing agent component.

In addition, the ratio ((A):(B)) of the solid content of the epoxy resin (A) to the solid content of the silicone resin (B) in the present composition is preferably 1:20 to 50:1, more preferably 1:10 to 10:1, and particularly preferably 1:5 to 5:1 from the viewpoint of, for example, an ability to easily form a coating film with heat resistance, anticorrosion property, and interlayer adhesion in a good balance.

<Aluminum (C)>

The aluminum (C) is not particularly limited, but is preferably in a powder form, and may be scaly aluminum powder or non-scaly aluminum powder other than scaly aluminum powder.

In addition, as a raw material for preparing the present composition, not only powdery but also pasty aluminum may be used.

One kind or two or more kinds of the aluminum powder (B) contained in the present composition are acceptable.

The "scaly" refers to a material having a scaly shape. Although there is no particularly defined range, usually, the aspect ratio is preferably 5 or larger, more preferably 10 or larger, and still more preferably 20 or larger, and preferably 150 or less and more preferably 120 or less.

In addition, the "non-scaly" refers to a shape other than a scaly shape, such as a spherical shape, a teardrop shape, or a spindle shape. Although there is no particularly defined range, usually, the aspect ratio is preferably less

than 5 and more preferably 1 or higher, and more preferably 3 or less.

The aspect ratio may be measured using an electron microscope. A scanning electron microscope (SEM), for example, "XL-30" (trade name; manufactured by Koninklijke Philips N.V.) may be used to observe aluminum powder. Next, the thicknesses of several 10 to several 100 powder particles and the maximum length of the main surface (alternatively, the length of the major axis and the length of the minor axis) were measured. Then, each ratio (maximum length/thickness of the main surface, or major axis length/minor axis length) may be averaged for calculation.

Note that the thickness of the aluminum powder may be measured by observing the main surface (surface having the largest area) of the powder from a horizontal direction. In addition, the maximum length of the main surface of the aluminum powder means, for example, the length of a diagonal line when the main surface is quadrangular, the diameter when the main surface is circular, and the length of a major axis when the main surface is elliptical. The length of the major axis of the aluminum powder is specifically the longest length in a cross-sectional view at or near the center of the powder. The length of the minor axis of the aluminum powder is, in the cross-sectional view, the length of a line orthogonal to the major axis at the center of the cross-sectional view.

From the viewpoint of, for example, an ability to easily form a coating film with better anticorrosion property, the median diameter (D50) of the scaly aluminum powder is preferably 100 um or less and more preferably 5 um or larger, and more preferably 70 um or less and particularly preferably 50 um or less.

From the viewpoint of, for example, an ability to easily obtain a composition with excellent coating workability at a low VOC amount, the median diameter (D50) of the non-scaly aluminum powder (D) is preferably 50 um or less and more preferably 5 um or larger, and more preferably 30 um or less and particularly preferably 15 um or less.

The D50 is an average value obtained from 3 measurements using a laser scattering diffraction type particle size distribution measuring instrument, for example, "SALD 2200" (manufactured by Shimadzu Corporation).

The scaly aluminum powder may be a leafing type or a non-leafing type. However, it is preferable to use a leafing type from the viewpoint of, for example, an ability to suppress change in quality of the coating film and deterioration of adhesion to a substrate. In addition, in the case of using the scaly aluminum powder, a leafing type and a non-leafing type may be used.

The non-scaly aluminum powder is preferably aluminum powder produced by an atomization method (spraying method).

From the viewpoint of, for example, an ability to easily form a coating film with anticorrosion property, heat resistance, and interlayer adhesion in a good balance, and an ability to easily form a coating film capable of further suppressing deterioration of coating film physical properties and a change in the state of the coating film and the hue of the coating film even when the coating film is exposed to a high temperature, the content of the aluminum powder (C) in the present composition is preferably 0.1 mass% or larger and more preferably 1 mass% or larger, and preferably 30 mass% or less and more preferably 20 mass% or less based on 100 mass% of the nonvolatile content in the present composition.

From the viewpoint of substantially the same effects as described above, the content of the aluminum powder (C) in the present composition is preferably 1 part by mass or larger and more preferably 3 parts by mass or larger, and preferably 200 parts by mass or less and more preferably 100 parts by mass or less based on 100 parts by mass of the solid content in the epoxy resin (A).

From the viewpoint of substantially the same effects as described above, the content of the aluminum powder (C) in the present composition is preferably 1 part by mass or larger and more preferably 3 parts by mass or larger, and preferably 200 parts by mass or less and more preferably 100 parts by mass or less based on 100 parts by mass of the solid content in the silicone resin (B).

From the viewpoint of substantially the same effects as described above, the content of the aluminum powder (C) in the present composition is preferably 1 part by mass or larger and more preferably 3 parts by mass or larger, and preferably 100 parts by mass or less and more preferably 50 parts by mass or less based on the total of 100 parts by mass of the solid content in the epoxy resin (A) and the solid content in the silicone resin (B).

<Amine Curing Agent (D)>

The amine curing agent (D) is not particularly limited as long as it is an amine compound, but, for example, an aliphatic, an alicyclic, an aromatic, or a heterocyclic amine compound is preferable. Note that these amine compounds are distinguished by the type of an amino group-bonded carbon. For example, the aliphatic amine curing agent refers to a compound having at least one amino group bonded to aliphatic carbon.

One kind or two or more kinds of the amine curing agent (D) contained in the present composition are acceptable.

Examples of the aliphatic amine curing agent include an alkylene polyamine, a polyalkylene polyamine, or an alkylaminoalkylamine.

Examples of the alkylene polyamine include a compound represented by the formula: "$H_2N-R^1-NH_2$" ($R^1$ is a $C_{1-12}$ divalent hydrocarbon group). Specific examples include methylenediamine, ethylenediamine, 1,2-diaminopropane,

1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, or trimethylhexamethylenediamine.

Examples of the polyalkylene polyamine include a compound represented by the formula: "$H_2N-(C_mH_{2m}NH)_nH$" (m is an integer of 1 to 10. n is an integer of 2 to 10 and is preferably an integer of 2 to 6). Specific examples include diethylenetriamine, dipropylenetriamine, triethylenetetramine, tripropylenetetramine, tetraethylenepentamine, tetrapropylenepentamine, pentaethylenehexamine, nonaethylenedecamine, bis(hexamethylene)triamine, or triethylene-bis(trimethylene)hexamine.

Examples of the alkylaminoalkylamine include a compound represented by the formula: "$R^2{}_2N-(CH_2)_p-NH_2$" (each $R^2$ is independently a hydrogen atom or a $C_{1-8}$ alkyl group (provided that at least one $R^2$ is a $C_{1-8}$ alkyl group), and p is an integer of 1 to 6). Specific examples include dimethylaminoethylamine, diethylaminoethylamine, dibutylaminoethylamine, dimethylaminopropylamine, diethylaminopropylamine, dipropylaminopropylamine, dibutylaminopropylamine, or dimethylaminobutylamine.

Examples of the aliphatic amine curing agent other than these include tetra(aminomethyl)methane, tetrakis(2-aminoethylaminomethyl)methane, 1,3-bis(2'-aminoethylamino)propane, tris(2-aminoethyl)amine, bis(cyanoethyl)diethylenetriamine, polyoxyalkylene polyamine (in particular diethylene glycol bis(3-aminopropyl)ether), bis(aminomethyl)cyclohexane, isophoronediamine (IPDA), menthanediamine (MDA), o-xylylenediamine, m-xylylenediamine (MXDA), p-xylylenediamine, bis(aminomethyl)naphthalene, bis(aminoethyl)naphthalene, 1,4-bis(3-aminopropyl)piperazine, 1-(2'-aminoethylpiperazine), or 1-[2'-(2''-aminoethylamino)ethyl]piperazine.

Specific examples of the alicyclic amine curing agent include cyclohexanediamine, diaminodicyclohexylmethane (in particular, 4,4'-methylenebiscyclohexylamine), 4,4'-isopropylidenebiscyclohexylamine, norbornanediamine, or 2,4-di(4-aminocyclohexylmethyl)aniline.

Examples of the aromatic amine curing agent include an aromatic polyamine compound having two or more primary amino groups bonded to an aromatic ring such as a benzene ring or a naphthalene ring.

Specific examples of this aromatic amine curing agent include phenylenediamine, naphthalenediamine, diaminodiphenylmethane, 2,2-bis(4-aminophenyl)propane, 4,4'-diaminodiphenyl ether, 4,4'-diaminobenzophenone, 4,4'-diaminodiphenylsulfone, 3,3'-dimethyl-4,4'-diaminodiphenylmethane, diaminodiethylphenylmethane, 2,4'-diaminobiphenyl, 2,3'-dimethyl-4,4'-diaminobiphenyl, or 3,3'-dimethoxy-4,4'-diaminobiphenyl.

Specific examples of the heterocyclic amine curing agent include 1,4-diazacycloheptane, 1,11-diazacycloeicosane, or 1,15-diazacyclooctacosane.

Examples of the amine curing agent (D) further include a modified product of an amine compound, such as a fatty acid modified product such as polyamidoamine, an amine adduct with an epoxy compound (epoxy adduct of an amine compound), a Mannich modified product (e.g., phenalkamine, phenalkamide), a Michael adduct, ketimine, or aldimine.

As the amine curing agent (D), a polyamidoamine or an amine adduct with an epoxy compound is preferable, and an amine adduct with an epoxy compound is particularly preferable. Use of such an amine curing agent (D) makes it possible to easily form a coating film with better anticorrosion property.

The amine curing agent (D) may be obtained by synthesis using a conventionally known procedure, or a commercially available product may be used. Examples of the commercially available product include "TD -961" (manufactured by DIC Corporation), which is a modified aliphatic polyamine (epoxy adduct of ethylenediamine), or "AD-71" (manufactured by OHTAKE-MEISHIN CHEMICAL, CO., LTD.), which is a modified aliphatic polyamine (epoxy adduct of diethylenetriamine).

From the viewpoint of, for example, an ability to easily form a coating film with better anticorrosion property, the active hydrogen equivalent of the amine curing agent (D) is preferably 50 or higher and more preferably 100 or higher, and preferably 1,000 or less and more preferably 500 or less.

The active hydrogen equivalent herein refers to the active hydrogen equivalent of the solid content in the amine curing agent (D).

From the viewpoint of, for example, an ability to easily form a coating film with excellent anticorrosion property, coating film strength, and drying property, it is desirable that the amine curing agent (D) is used in an amount such that the reaction rate calculated by the following formula (2) is preferably 0.3 or higher and more preferably 0.4 or higher, and preferably 1.5 or less and more preferably 1.2 or less.

Reaction rate = {(Blending amount of solid content of the amine curing agent (D)/Active hydrogen equivalent of amine curing agent (D)) + (Blending amount of solid content of a component reactive to the epoxy resin (A)/Functional group equivalent of solid content of a component reactive to the epoxy resin (A))}/{(Blending amount of solid content of the epoxy compound (A)/Epoxy equivalent of the epoxy compound (A)) + (Blending amount of solid content of a component reactive to the amine curing agent (D)/Functional group equivalent of solid content of a component reactive to the amine curing agent (D))} ••• (2).

Here, examples of the "component reactive to the amine curing agent (D)" in the formula (2) include a component reactive to the amine curing agent (D) in the following other components. In addition, examples of the "component reactive to the epoxy resin (A)" include a component reactive to the epoxy resin (A) in the following other components. The "functional group equivalent" of each component means a mass (g) per 1 mol functional group as obtained by dividing the mass of 1 mol of each component by the number of moles of functional group contained therein.

When the present composition is a two-component type composition containing a base component and a curing agent component, the amine curing agent (D) is included in the curing agent component. The viscosity of this curing agent component at 25°C as measured with an E-type viscometer is preferably 100,000 mPa·s or less and more preferably 50 mPa·s or larger, and more preferably 10,000 mPa·s or less from the viewpoint of, for example, providing a composition with better handling and coating workability.

<Other Components>

The present composition is not particularly limited as long as the composition contains the components (A) to (D), and optionally contains another component(s) (e.g., a silane coupling agent, a pigment, a pigment dispersant, an antifoaming agent, an anti-sagging/anti-settling agent (thixotropic agent), a dehydrating agent, a curing accelerator, a curing catalyst, an organic solvent), as desired, as long as the effects of the present invention are not impaired.

One kind of the other component may be used, or two or more kinds thereof may be used.

[Silane Coupling Agent]

Use of the silane coupling agent can further increase not only adhesion of the resulting coating film to a substrate, but also the water resistance, anticorrosion property (e.g., salt water resistance), and heat resistance of the resulting coating film.

One kind of the silane coupling agent may be used singly, or two or more kinds thereof may be used.

The silane coupling agent is not particularly limited, and each conventionally known compound may be used. A compound having at least two functional groups in the same molecule and being able to contribute to, for example, improvement in adhesion to a substrate and a decrease in the viscosity of the present composition is preferable. For example, the silane coupling agent is preferably a compound represented by the formula: "$X\text{-}SiMe_nY_{3-n}$ " [n is 0 or 1; X represents a reactive group capable of reacting with an organic substance (e.g., an amino group, a vinyl group, an epoxy group, a mercapto group, a halogen group, a group in which part of a hydrocarbon group is substituted with these groups,

or a group where part of a group, in which part of a hydrocarbon group is substituted with, for instance, an ether bond, is substituted with these groups); Me is a methyl group; and Y represents a hydrolyzable group (e.g., an alkoxy group such as methoxy group or an ethoxy group)].

As the silane coupling agent, an epoxy group-containing silane coupling agent or an amino group-containing silane coupling agent is preferable.

Use of an epoxy group-containing silane coupling agent is preferable from the viewpoint of, for example, adhesion of the resulting coating film to a substrate and improvement of anticorrosion property. Use of an amino group-containing silane coupling agent is preferable from the viewpoint of, for example, adhesion of the resulting coating film to a substrate and improvement of anticorrosion property and heat resistance. In addition, use of an amino group-containing silane coupling agent can also suppress discoloration of the resulting coating film.

Specific examples of the commercially available product of the silane coupling agent include: "KBM-403" (3-glycidoxypropyltrimethoxysilane; manufactured by Shin-Etsu Chemical Co., Ltd.); "Sila-Ace S-510" (manufactured by JNC Corporation); or "KBM-603" (N-2-(aminoethyl)-3-aminopropyltrimethoxysilane, manufactured by Shin-Etsu Chemical Co., Ltd.).

The present composition may contain a silane coupling agent. In this case, the content of the silane coupling agent is preferably 0.1 mass% or larger and more preferably 0.3 mass% or larger, and preferably 10 mass% or less and more preferably 5 mass% or less based on 100 mass% of the nonvolatile content in the present composition.

When the content of the silane coupling agent is within the above range, the viscosity of the present composition can be reduced. Thus, not only the coating workability is improved, but also the adhesion of the resulting coating film to a substrate and the anticorrosion property are improved.

The present composition may contain an epoxy group-containing silane coupling agent. In this case, from the viewpoint of substantially the same effects as described above, the content of the epoxy group-containing silane coupling agent is preferably 0.1 mass% or larger and more preferably 0.3 mass% or larger, and preferably 10 mass% or less and more preferably 5 mass% or less based on 100 mass% of the nonvolatile content in the present composition.

In addition, the present composition may contain an amino group-containing silane coupling agent. In this case, from the viewpoint of substantially the same effects as described above, the content of the amino group-containing silane coupling agent is preferably 0.1 mass% or larger and more preferably 0.3 mass% or larger, and preferably 10 mass% or less and more preferably 5 mass% or less based on 100 mass% of the nonvolatile content in the present composition.

In addition, the present composition may contain an amino group-containing silane coupling agent. In this case, from the viewpoint of substantially the same effects as described above, the content of the amino group-containing silane coupling agent is preferably 0.1 parts by mass or larger and more preferably 1 part by mass or larger, and preferably 20 parts by mass or less and more preferably 10 parts by mass or less based on 100 parts by mass of the solid content in the silicone resin (B).

[Pigment]

The present composition may contain a pigment, and preferably contains a pigment.

Examples of the pigment include an extender pigment, a coloring pigment, or an anti-rust pigment, and the pigment may be organic or inorganic.

One kind of the pigment may be used, or two or more kinds thereof may be used.

Examples of the extender pigment include talc, mica, (precipitating) barium sulfate, (potash) feldspar, kaolin, alumina white, bentonite, wollastonite, clay, glass flakes, aluminum flakes, scaly iron oxide, magnesium carbonate, barium carbonate, calcium carbonate, dolomite, or silica. In particular, talc, mica, silica, (precipitating) barium sulfate, or (potash) feldspar is preferable.

The present composition may contain an extender pigment. In this case, the content of the extender pigment is preferably 5 mass% or larger and more preferably 10 mass% or larger, and preferably 80 mass% or less and more preferably 70 mass% or less based on 100 mass% of the nonvolatile content in the present composition.

Examples of the coloring pigment include an inorganic pigment (e.g., carbon black, titanium dioxide (titanium white), iron oxide (red iron oxide), yellow iron oxide, ultramarine blue), or an organic pigment (e.g., cyanine blue, cyanine green). In particular, titanium white, carbon black, or red iron oxide is preferable.

The present composition may contain a coloring pigment. In this case, the content of the coloring pigment is preferably 0.1 mass% or larger and more preferably 1 mass% or larger, and preferably 30 mass% or less and more preferably 20 mass% or less based on 100 mass% of the nonvolatile content in the present composition.

Examples of the anti-rust pigment include zinc powder, zinc alloy powder, a zinc phosphate compound, a calcium phosphate compound, an aluminum phosphate compound, a magnesium phosphate compound, a zinc phosphite compound, a calcium phosphite compound, an aluminum phosphite compound, a strontium phosphite compound, an aluminum tripolyphosphate compound, a molybdate compound, a zinc cyanamide compound, a borate compound, a nitro compound, or a complex oxide.

The present composition may contain a pigment. In this case, from the viewpoint of, for example, an ability to easily obtain a composition with excellent coating workability and an ability to easily produce a coating film with excellent anticorrosion property and excellent adhesion to a substrate due to stress relaxation, the pigment volume concentration (PVC) in the present composition is preferably 10% or higher and more preferably 20% or higher, and preferably 60% or less and more preferably 50% or less.

The PVC refers to the total volume concentration of the pigment based on the volume of the nonvolatile content in the present composition. Note that examples of the pigment in the case of calculating PVC include aluminum (C) and a pigment in the other components. Specifically, the PVC can be calculated from the following formula:

PVC [%] = Total volume of all pigments in the present composition × 100/Volume of nonvolatile content in the present composition.

Note that as used herein, the nonvolatile content in the present composition means a heating residue obtained according to JIS K 5601-1-2 (heating temperature: 125°C, heating time: 60 minutes). Meanwhile, the nonvolatile content in the present composition can also be calculated as an amount excluding a solvent in the raw material used and the organic solvent.

Here, the "solid content" refers to a component that is other than a solvent and is in each component (e.g., epoxy resin (A)) made of a raw material included, as a component, in the present composition, the base component, or the curing agent component, or is in the base component or in the curing agent component.

The volume of the nonvolatile content in the present composition can be calculated from the mass and true density of the nonvolatile content in the present composition. The mass and true density of the nonvolatile content may be measured values or values calculated from raw materials used.

The volume of the pigment can be calculated from the mass and true density of the pigment used. The mass and true density of the pigment may be measured values or values calculated from raw materials used. For example, they can be calculated by separating the pigment and other components from the nonvolatile content in the present composition and measuring the mass and true density of the pigment separated.

[Anti-Sagging Agent/Anti-Settling Agent (Thixotropic Agent)]

The anti-sagging/anti-settling agent (thixotropic agent) is not particularly limited, but is preferably a material capable of suppressing the settling of, for instance, a pigment in the present composition and improving the storage stability thereof, or a material capable of improving the anti-sagging property of the present composition during or after coating application.

As the anti-sagging agent/anti-settling agent, it is possible to use a conventionally known agent (e.g., an organoclay wax such as a stearate salt, a lecithin salt, an alkyl sulfonate of Al, Ca, or Zn, polyethylene wax, amide wax, hydrogenated castor oil wax, a mixture of hydrogenated castor oil wax and amide wax, synthetic fine powder silica, or polyethylene oxide wax). Among them, amide wax, synthetic fine powder silica, polyethylene oxide wax, or organoclay wax is preferable.

Such an anti-sagging agent/anti-settling agent may be a commercially available product. Examples of the commercially available product include: "Disparlon 305", "Disparlon 4200-20", "Disparlon 6650", manufactured by Kusumoto Chemicals, Ltd.; "A-S-A T-250F", manufactured by ITOH OIL CHEMICALS CO., LTD.; "Flownon RCM-300", manufactured by KYOEISHA CHEMICAL Co., LTD.; or "BENTONE SD-2", manufactured by Elementis Specialties, Inc.); or "AEROSIL R972", a silica thixotropic agent (manufactured by NIPPON AEROSIL CO., LTD.).

The present composition may contain an anti-sagging agent/anti-settling agent. In this case, the content of the anti-sagging agent (anti-settling agent) is preferably from 0.1 to 10 mass% based on 100 mass% of the nonvolatile content in the present composition.

[Organic Solvent]

The organic solvent is not particularly limited, and examples thereof include: an aromatic hydrocarbon solvent (e.g., toluene, xylene); a ketone solvent (e.g., methyl ethyl ketone (MEK), methyl isobutyl ketone (MIBK)); an ether solvent (e.g., butyl cellosolve); an ester solvent (e.g., butyl acetate); an alcohol solvent (e.g., isopropanol, isobutyl alcohol, n-butanol, propylene glycol monomethyl ether (PGM)); or an aliphatic hydrocarbon solvent (e.g., mineral spirit, n-hexane,

n-octane, 2,2,2-trimethylpentane, isooctane, n-nonane, cyclohexane, methylcyclohexane).

The present composition may contain an organic solvent. In this case, it is desirable to use the organic solvent in an amount of preferably 10 mass% or larger and more preferably 20 mass% or larger, and preferably 80 mass% or less and more preferably 70 mass% or less based on the nonvolatile content in the present composition.

From the viewpoint of, for example, providing a composition with less environmental and human body effects, the content of the VOC (volatile organic component) in the present composition is preferably 700 g/L or less, more preferably 600 g/L or less, and particularly preferably 500 g/L or less.

The VOC content in the present composition may be calculated using the following coating material specific gravity and nonvolatile content in the present composition by the formula (1) below:

$$\text{VOC content (g/L)} = \text{Coating material specific gravity} \times 1000 \times (100 - \text{Nonvolatile content in the present composition})/100 \cdots (1).$$

Coating material specific gravity (g/cm$^3$): a value calculated by filling a specific gravity cup having an internal volume of 100 ml with the present composition (e.g., a composition obtained immediately after a base component and a curing agent component are mixed) under a temperature condition of 23°C, and then measuring the mass of the composition.

<<Coating film and Substrate with Coating Film>>

The coating film (hereinafter, also referred to as the "present coating film") according to an embodiment of the present invention is formed from the present composition described above, and a substrate with a coating film according to an embodiment of the present invention is a laminate including the present coating film and a substrate. A preferred example of the present coating film is a heat-resistant coating film.

The substrate is not particularly limited, and examples thereof include a metal substrate made of iron and steel (e.g., iron, steel, alloy iron, carbon steel, alloy steel), or a non-iron metal (e.g., stainless steel, aluminum, zinc plating, brass, an alloy of copper and zinc), and a metal substrate, the surface of which is coated with, for instance, a shop primer. In addition, examples of the substrate include a plant structure, a land structure, a marine structure, or a ship. From the viewpoint of, for example, exerting a better effect of the present invention, the substrate preferably involves steam pipes of ships, pipes used for, for instance, petroleum refining or chemical plants, and industrial pipes (e.g., industrial pipes covered with, for instance, a heat insulating material). Among them, a steam pipe of a ship is more preferable.

The film thickness of the present coating film is not particularly limited, but is preferably from 30 to 400 um and more preferably from 30 to 300 um, and the film thickness may be of a single layer film formed by one coating application or a multilayer film formed by multiple coating applications. In particular, when the substrate is made of iron and steel (e.g., iron, steel, alloy iron, carbon steel, alloy steel), the film thickness of the present coating film is preferably 100 μm or more from the viewpoint of long-term anticorrosion property.

Since the present composition is used, even when a coating film having such a thick film thickness is formed on a substrate, blistering and/or cracking are less likely to occur in the coating film. In particular, even when the substrate is exposed to a high temperature of about 200°C, blistering and/or cracking are less likely to occur, so that the substrate can be prevented from being corroded for a long period of time.

The present coating film is formed from the present composition described above, and specifically, may be produced through steps including the following steps [1] and [2] :

the step [1] of applying the present composition to a substrate; and
the step [2] of drying the coating composition applied on the substrate to form a coating film.

<Step [1]>

The process of applying the present composition onto a substrate is not particularly limited, and conventionally known processes may be used without limitation. Preferred is, for example, conventionally used coating application such as airless spray coating application, air spray coating application, brush coating application, or roll coating application. Spray coating application is preferable from the viewpoint that, for example, workability and productivity are excellent,

coating application can be easily performed on a substrate with a large area, and the effects of the present invention can be further exerted.

Note that when the present composition is a two-component type composition, it is preferable to mix the base component and the curing agent component immediately before coating application and to perform, for example, spray coating application.

The conditions of the spray coating application may be adjusted, if appropriate, according to a coating film thickness to be formed. However, for example, in the case of airless spray coating application, the coating application conditions may be set such that the primary (air) pressure is from about 0.4 to 0.8 MPa, the secondary (coating material) pressure is from about 10 to 26 MPa, and the gun moving speed is from about 50 to 120 cm/second.

The viscosity of the present composition used at this time is preferably from about 1.8 to 2.5 Pa·s at 23°C as measured with a B-type viscometer ("TVB-10M", manufactured by Toki Sangyo Co., Ltd). In order to obtain the present composition having such a viscosity, the viscosity of the present composition may be adjusted using, for instance, a thinner.

The thinner is preferably an organic solvent capable of dissolving or dispersing the components in the present composition. Examples thereof include an aromatic hydrocarbon solvent (e.g., toluene, xylene), an aliphatic hydrocarbon solvent (e.g., mineral spirit, cyclohexane), or an alcohol solvent (e.g., n-butanol, isopropanol). One kind or two or more kinds of the thinner may be used.

When the present composition is applied onto a substrate, in order to remove rust, oil, water, dust, and salts, for example, and in order to increase adhesion of the resulting coating film to a substrate, it is preferable to, for example, treat a surface of the substrate (e.g., blasting treatment (ISO8501-1 Sa2 1/2), degreasing treatment for removing oil and/or dust), if necessary. In addition, the substrate may be applied with, for instance, a shop primer for the purpose of primary rust prevention.

<Step [2]>

The present composition can be dried and cured at room temperature. Even when dried and cured at room temperature, a coating film with excellent heat resistance and anticorrosion property can be obtained. In addition, if desired, drying may be performed under heating in order to shorten the drying time.

The drying conditions are not particularly limited, and may be set, if appropriate, depending on, for example, the present composition, the substrate, and the coating application place. However, the drying temperature is preferably from 5 to 40°C and more preferably from 10 to 30°C, and the drying time is preferably from 18 hours to 14 days and more preferably from 24 hours to 7 days.

The method of forming a coating film with the above film thickness may include forming a coating film with the desired film thickness by one coating application, or forming a coating film with the desired film thickness by two or more coating applications (multiple coating applications). From the viewpoint of film thickness management and in consideration of the residual organic solvent in the coating film, it is preferable to form a coating film with the desired film thickness by two or more coating applications.

Note that the two coating applications refer to a process in which the steps [1] and [2] are performed on the resulting coating film after the steps [1] and [2] have been performed. Three or more coating applications refer to a process in which a series of the steps is further repeated.

When the coating film is formed by two or more coating applications for example, it is preferable that the hue of the coating material/coating film applied first is different from the hue of the coating material/coating film applied next. This is a measure for facilitating determination of missing coating application or insufficient film thickness during the coating work. In addition, top coating application may be performed in order to finish the hue of the final outer surface to a specified hue.

## Examples

Hereinafter, the present invention will be further described with reference to Examples. However, the present invention is not limited thereto.

[Examples 1 to 16 and Comparative Examples 1 to 10]

To a container was added each material, described in each row of base component in Tables 1 to 3, at the numerical value (parts by mass) designated in the row. The mixture was stirred at room temperature by using a high-speed disperser until it became uniform, and further dispersed until the temperature became 50°C. Thereafter, the mixture was cooled to 30°C or lower to prepare a base component of the coating composition.

In addition, to a container was added each material, described in each row of curing agent component in Tables

1 to 3, at the numerical value (parts by mass) designated in the row. A high-speed disperser was used to mix these components at room temperature under normal pressure. The curing agent component was thus prepared.

The base component and the curing agent component were mixed at each blending ratio described in Tables 1 to 3 before coating application to prepare a coating composition.

Table 4 shows the description of each component described in Tables 1 to 3. Note that the solid content (mass%) of each component in Table 4 is a manufacturer's catalog value.

[Production of Test Plate]

Each coating composition prepared as described above was 10 mass% diluted (10 g of thinner with respect to 100 g of coating composition) using a thinner A for epoxy resin (manufactured by Chugoku Marine Paints, Ltd.).

On a surface of a SS400 sandblasted steel plate (arithmetic mean roughness (Ra): 30 to 75 μm) with a size of 150 mm × 70 mm × 2.3 mm (thickness), the diluted composition was applied using a film applicator with gaps of 500 um so that the dry film thickness was 150 um (first coating application). Thereafter, the coating composition applied onto the steel plate was dried at room temperature (23°C) for 24 hours.

Next, the diluted composition was applied onto the dried coating film (first layer coating film) using a film applicator having gaps of 500 um so that the dry film thickness was 150 um (second coating application). The steel plate was dried at room temperature (23°C) for 3 days to prepare a test plate (substrate with coating film) in which the first layer coating film and the second layer coating film were laminated in this order on the steel plate.

Each prepared test plate was used to test the following interlayer adhesion, heat resistance (state of coating film after exposure to a high temperature), and heat resistance (discoloration resistance). The results are shown in Tables 1 to 3.

<Interlayer Adhesion>

The interlayer adhesion between the first layer coating film and the second layer coating film was evaluated in accordance with the cross-cut protocol defined in JIS K 5600-5-6:1999.

Note that at the time of cutting, a notch was created that reached the first layer coating film from the second layer coating film side of the test plate.

<Heat Resistance (State of Coating Film After Exposure to High Temperature)>

Each test plate prepared as described above was heated at 200°C for 6 hours, and the temperature was then returned to room temperature. The state of the coating film surface after returning to room temperature was evaluated based on ASTM D714-87.

The evaluation is indicated by a combination of a numerical value representing the "size of blistering" and a symbol representing the "occurring density of blistering". The "size of blistering" is represented by numerical values of 8, 6, 4, and 2 as the size of blistering increases, and 10 is a state where there is no blistering at all. The "occurring density of blistering" is represented by symbols F, M, MD, and D as the density becomes higher.

<Heat Resistance (Discoloration Resistance)>

L*, a*, and b* of the surface of the coating film on each test plate prepared as described above were measured in accordance with JIS K 5600-4-5:1999 by using a spectrocolorimeter (Model: CM-3700 A, manufactured by KONICA MINOLTA JAPAN, INC.). Here, each test plate prepared as described above was heated at 200°C for 6 hours. Next, L*, a*, and b* of the surface of the coating film on the test plate after the temperature was returned to room temperature were measured. The color difference ΔE of the coating film surface between before and after exposure to a high temperature was then calculated in accordance with JIS K 5600-4-6:1999.

Note that each discoloration reduction rate in Tables 2 to 3 is the percentage of the ratio of ΔE in Example to ΔE in the corresponding Comparative Example. For example, the discoloration reduction rate of Example 5 or 6 is the percentage of the ratio of ΔE in Example 5 or 6 to ΔE in Comparative Example 3. For example, the discoloration reduction rate of Example 7 or 8 is the percentage of the ratio of ΔE in Example 7 or 8 to ΔE in Comparative Example 4.

<To Measure Glass Transition Temperature (Tg)>

Each coating composition prepared as described above was 10 mass% diluted (10 g of thinner with respect to 100 g of coating composition) using a thinner A for epoxy resin (manufactured by Chugoku Marine Paints, Ltd.). The diluted composition was applied onto release paper using a film applicator having gaps of 500 um so that the dry film

thickness was 150 um. Next, the applied coating composition was dried at room temperature for 7 days, and the coating film separated from the release paper was punched into a circle having a diameter of 3.5 mm. The temperature of the punched coating film was raised from -50°C to 150°C by 20°C per minute while using a DSC Q2000 (manufactured by TA Instruments Japan Inc.). After that, the punched coating film was cooled to -50°C, and the Tg was determined from the DSC curve when the temperature was raised from -50°C to 150°C by 20°C per minute in the same manner as described above. The results are shown in Table 1.

In general, it is known that the higher the Tg, the better the heat resistance.

<To Measure Mass Reduction Rate>

Each coating composition prepared as described above was 10 mass% diluted (10 g of thinner with respect to 100 g of coating composition) using a thinner A for epoxy resin (manufactured by Chugoku Marine Paints, Ltd.). The diluted composition was applied onto release paper using a film applicator having gaps of 500 um so that the dry film thickness was 150 um. Next, the applied coating composition was dried at room temperature for 7 days, and the coating film separated from the release paper was punched into a piece having a diameter of 3.5 mm. The temperature of the punched coating film was raised from 30°C by 10°C per minute while using a STA7300 (manufactured by Hitachi High-Tech Corporation). The mass reduction rate of the coating film at 250°C [("Mass of coating film before temperature increase" - "Mass of coating film at -250°C") × 100/"Mass of coating film before temperature increase"] when the temperature was raised to 1,000°C was measured. The results are shown in Table 1.

In general, it is known that the lower the coating film mass reduction rate, the better the heat resistance.

<Anticorrosion Test>

[Production of Test Plate]

Each coating composition prepared as described above was 10 mass% diluted (10 g of thinner with respect to 100 g of coating composition) using a thinner A for epoxy resin (manufactured by Chugoku Marine Paints, Ltd.). On a surface of a SSPC-SB cold rolled steel plate (JIS G 3141) with a size of 150 mm × 70 mm × 0.8 mm (thickness), the diluted composition was applied by using an air spray, so that the dry film thickness was 100 um (first coating application). Thereafter, the coating composition applied onto the steel plate was dried at room temperature (23°C) for 24 hours. Next, the diluted composition was applied onto the dried coating film by using an air spray, so that the dry film thickness was 100 um (second coating application). Then, the applied composition was dried at room temperature (23°C) for 7 days to prepare each test plate for evaluating anticorrosion property.

As shown in Fig. 1, each cut 2 was made at a position of 10 mm from each of both ends of the long side and 20 mm from either one of both ends of the short side of each of the obtained test plates 1 for evaluating anticorrosion property until the cut 2 reached a surface of the substrate steel plate so that the length was 50 mm.

The test plate cut as described above was heated at 200°C for 6 hours, then allowed to stand at room temperature for 18 hours, and then placed in a salt water sprayer (in accordance with JIS K 5600-7-1) for 144 hours. This condition is defined as one cycle. This cycle was repeated for a total of 8 cycles (1,344 hours). Then, a case where the maximum length from the cut to the portion where the coating film was peeled from the steel plate was within 20 mm was defined as pass (AA), and a case where the maximum length exceeded 20 mm was defined as fail (DD). The results are shown in Table 1.

It is considered that the coating films formed from the coating compositions obtained in Examples 1 to 3 and 5 to 16 exhibit substantially the same anticorrosion property as in Example 4. In addition, similarly to the comparison between Example 4 and Comparative Example 2, it is considered that these Examples have a higher glass transition temperature (Tg) and a lower mass reduction rate than the corresponding Comparative Examples.

The coating films formed from the coating compositions obtained in Comparative Examples 1 and 3 to 10 seem to exhibit substantially the same anticorrosion property as in Comparative Example 2.

[Table 1]

| | | Ex. 1 | Ex. 2 | Ex. 3 | Ex. 4 | Comp. Ex. 1 | Comp. Ex. 2 |
|---|---|---|---|---|---|---|---|
| Base component | 1007 | 18 | 18 | 18 | 18 | 18 | 18 |
| | RSN0806 | 12 | 12 | 12 | 12 | 12 | 12 |
| | MEK | 9 | 9 | 9 | 9 | 9 | 9 |
| | MIBK | 9 | 9 | 9 | 9 | 9 | 9 |
| | PGM | 3.67 | 2.87 | 3.67 | 2.87 | 4.97 | 4.97 |
| | Talc F-2 | 27 | 25 | 27 | 25 | 30 | 30 |
| | Mica 100mesh | 5 | 5 | 5 | 5 | 5 | 5 |
| | Barico300W | 5 | 5 | 5 | 5 | 5 | 5 |
| | R-930 | 5 | 5 | 5 | 5 | 5 | 5 |
| | MA-100 | 0.03 | 0.03 | 0.03 | 0.03 | 0.03 | 0.03 |
| | Alpaste 0100M-C70 | 4.3 | 7.1 | 4.3 | 7.1 | | |
| | KBM-403 | 1 | 1 | 1 | 1 | 1 | 1 |
| | Aerosil R972 | 1 | 1 | 1 | 1 | 1 | 1 |
| | Subtotal | 100 | 100 | 100 | 100 | 100 | 100 |
| Curing agent component | TD-961 | 20 | 20 | 15 | 15 | 20 | 15 |
| | KBM-603 | | | 5 | 5 | | 5 |
| | Xylene | 40 | 40 | 40 | 40 | 40 | 40 |
| | PGM | 40 | 40 | 40 | 40 | 40 | 40 |
| | Subtotal | 100 | 100 | 100 | 100 | 100 | 100 |
| Blending ratio | Base component | 90 | 90 | 90 | 90 | 90 | 90 |
| | Curing agent component | 10 | 10 | 10 | 10 | 10 | 10 |
| Reaction rate | | 0.46 | 0.46 | 0.90 | 0.90 | 0.46 | 0.90 |
| PVC | | 42.3 | 42.2 | 41.9 | 41.8 | 42.4 | 42.1 |
| Non-volatile content (mass%) | | 64.9 | 64.9 | 65.2 | 65.2 | 64.9 | 65.2 |
| VOC (g/L) | | 465.3 | 464.7 | 462.0 | 461.8 | 466.1 | 462.8 |
| Interlayer adhesion | | 0 | 0 | 0 | 0 | 0 | 0 |
| Heat resistance | State of coating film | 10 | 10 | 10 | 10 | 8D | 10 |
| | ΔE | 1.1 | 1.1 | 1.9 | 1.4 | 2.9 | 5.2 |
| Anti-corrosion property | | | | | AA | | DD |
| Tg (°C) | | | | | 75.6 | | 47.6 |
| Mass reduction rate (%) | | | | | 3.3 | | 5.6 |

[Table 2]

| | | Ex. 5 | Ex. 6 | Comp. Ex. 3 | Ex. 7 | Ex. 8 |
|---|---|---|---|---|---|---|
| Base component | E-001-75X | 32 | 32 | 32 | 32 | 32 |
| | RSN0806 | 16 | 16 | 16 | 16 | 16 |
| | PGM | 3.67 | 2.87 | 4.97 | 3.67 | 2.87 |
| | Xylene | | | | | |
| | Talc F-2 | 27 | 25 | 30 | 27 | 25 |
| | Mica 100mesh | 5 | 5 | 5 | 5 | 5 |
| | Barico300W | 5 | 5 | 5 | 5 | 5 |
| | R-930 | 5 | 5 | 5 | 5 | 5 |
| | MA-100 | 0.03 | 0.03 | 0.03 | 0.03 | 0.03 |
| | Alpaste 0100M-C70 | 4.3 | 7.1 | | 4.3 | 7.1 |
| | KBM-403 | 1 | 1 | 1 | 1 | 1 |
| | Aerosil R972 | 1 | 1 | 1 | 1 | 1 |
| | Subtotal | 100 | 100 | 100 | 100 | 100 |
| Curing agent component | AD-71 | 70 | 70 | 70 | 65 | 65 |
| | KBM-603 | | | | 5 | 5 |
| | Xylene | 10 | 10 | 10 | 10 | 10 |
| | PGM | 20 | 20 | 20 | 20 | 20 |
| | Subtotal | 100 | 100 | 100 | 100 | 100 |
| Blending ratio | Base component | 90 | 90 | 90 | 90 | 90 |
| | Curing agent component | 10 | 10 | 10 | 10 | 10 |
| Reaction rate | | 0.49 | 0.49 | 0.49 | 0.59 | 0.59 |
| PVC | | 34.3 | 34.2 | 34.4 | 34.1 | 34.0 |
| Non-volatile content (mass%) | | 74.6 | 74.6 | 74.6 | 74.9 | 74.9 |
| VOC (g/L) | | 357 | 357 | 358 | 354 | 354 |
| Interlayer adhesion | | 0 | 0 | 5 | 0 | 0 |
| Heat resistance | State of coating film | 10 | 10 | 10 | 10 | 10 |
| | ΔE | 4.4 | 3.0 | 14.2 | 4.6 | 3.3 |
| | Discoloration reduction rate | 30.9 | 21.0 | - | 30.8 | 22.0 |

Table 2 (continued)

| | | Comp. Ex. 4 | Ex. 9 | Comp. Ex. 5 | Ex. 10 | Comp. Ex. 6 |
|---|---|---|---|---|---|---|
| Base component | E-001-75X | 32 | 17.3 | 17.3 | 8.7 | 8.7 |
| | RSN0806 | 16 | 26 | 26 | 39 | 39 |
| | PGM | 4.97 | 2 | 2 | 2 | 2 |
| | Xylene | | 4.57 | 6.67 | 0.17 | 2.27 |
| | Talc F-2 | 30 | 26 | 31 | 26 | 31 |
| | Mica 100mesh | 5 | 5 | 5 | 5 | 5 |
| | Barico300W | 5 | 5 | 5 | 5 | 5 |
| | R-930 | 5 | 5 | 5 | 5 | 5 |
| | MA-100 | 0.03 | 0.03 | 0.03 | 0.03 | 0.03 |
| | Alpaste 0100M-C70 | | 7.1 | | 7.1 | |
| | KBM-403 | 1 | 1 | 1 | 1 | 1 |
| | Aerosil R972 | 1 | 1 | 1 | 1 | 1 |
| | Subtotal | 100 | 100 | 100 | 100 | 100 |
| Curing agent component | AD-71 | 65 | 40 | 40 | 40 | 40 |
| | KBM-603 | 5 | 5 | 5 | 5 | 5 |
| | Xylene | 10 | 35 | 35 | 35 | 35 |
| | PGM | 20 | 20 | 20 | 20 | 20 |
| | Subtotal | 100 | 100 | 100 | 100 | 100 |
| Blending ratio | Base component | 90 | 90 | 90 | 94 | 94 |
| | Curing agent component | 10 | 10 | 10 | 6 | 6 |
| Reaction rate | | 0.59 | 0.72 | 0.72 | 0.72 | 0.72 |
| PVC | | 34.2 | 40.3 | 40.5 | 42.0 | 42.2 |
| Non-volatile content (mass%) | | 74.9 | 69.1 | 69.1 | 71.1 | 71.1 |
| VOC (g/L) | | 355 | 428 | 428 | 410 | 410 |
| Interlayer adhesion | | 5 | 0 | 5 | 0 | 0 |
| Heat resistance | State of coating film | 10 | 10 | 10 | 10 | 10 |
| | ΔE | 15.0 | 2.9 | 13.5 | 1.0 | 10.1 |
| | Discoloration reduction rate | - | 21.6 | - | 9.6 | - |

[Table 3]

| | | Ex. 11 | Ex. 12 | Comp. Ex. 7 | Ex. 13 | Ex. 14 | Comp. Ex. 8 |
|---|---|---|---|---|---|---|---|
| Base component | E-834-85X | 31.8 | 31.8 | 31.8 | 31.8 | 31.8 | 31.8 |
| | RSN0806 | 18 | 18 | 18 | 18 | 18 | 18 |
| | PGM | 1.87 | 1.07 | 3.17 | 1.87 | 1.07 | 3.17 |
| | Xylene | | | | | | |
| | Talc F-2 | 27 | 25 | 30 | 27 | 25 | 30 |
| | Mica 100mesh | 5 | 5 | 5 | 5 | 5 | 5 |
| | Barico300W | 5 | 5 | 5 | 5 | 5 | 5 |
| | R-930 | 5 | 5 | 5 | 5 | 5 | 5 |
| | MA-100 | 0.03 | 0.03 | 0.03 | 0.03 | 0.03 | 0.03 |
| | Alpaste 0100M-C70 | 4.3 | 7.1 | | 4.3 | 7.1 | |
| | KBM-403 | 1 | 1 | 1 | 1 | 1 | 1 |
| | Aerosil R972 | 1 | 1 | 1 | 1 | 1 | 1 |
| | Subtotal | 100 | 100 | 100 | 100 | 100 | 100 |
| Curing agent component | AD-71 | 90 | 90 | 90 | 85 | 85 | 85 |
| | KBM-603 | | | | 5 | 5 | 5 |
| | Xylene | 5 | 5 | 5 | 5 | 5 | 5 |
| | PGM | 5 | 5 | 5 | 5 | 5 | 5 |
| | Subtotal | 100 | 100 | 100 | 100 | 100 | 100 |
| Blending ratio | Base component | 85 | 85 | 85 | 85 | 85 | 85 |
| | Curing agent component | 15 | 15 | 15 | 15 | 15 | 15 |
| Reaction rate | | 0.50 | 0.50 | 0.50 | 0.58 | 0.58 | 0.58 |
| PVC | | 29.7 | 29.6 | 29.8 | 29.4 | 29.4 | 29.5 |
| Non-volatile content (mass%) | | 77.4 | 77.3 | 77.4 | 77.7 | 77.7 | 77.7 |
| VOC (g/L) | | 315 | 315 | 316 | 310 | 310 | 311 |
| Interlayer adhesion | | 0 | 0 | 5 | 0 | 0 | 4 |
| Heat resistance | State of coating film | 10 | 10 | 10 | 10 | 10 | 10 |
| | ΔE | 11.2 | 9.2 | 25.5 | 11.8 | 9.6 | 26.8 |
| | Discoloration reduction rate | 44.0 | 36.1 | - | 43.9 | 35.7 | - |

Table 3 (continued)

| | | Ex. 15 | Comp. Ex. 9 | Ex. 16 | Comp. Ex. 10 |
|---|---|---|---|---|---|
| Base component | E-834-85X | 15.3 | 15.3 | 7.6 | 7.6 |
| | RSN0806 | 26 | 26 | 39 | 39 |
| | PGM | 2 | 2 | 2 | 2 |
| | Xylene | 6.57 | 8.67 | 1.27 | 3.37 |
| | Talc F-2 | 26 | 31 | 26 | 31 |
| | Mica 100mesh | 5 | 5 | 5 | 5 |
| | Barico300W | 5 | 5 | 5 | 5 |
| | R-930 | 5 | 5 | 5 | 5 |
| | MA-100 | 0.03 | 0.03 | 0.03 | 0.03 |
| | Alpaste 0100M-C70 | 7.1 | | 7.1 | |
| | KBM-403 | 1 | 1 | 1 | 1 |
| | Aerosil R972 | 1 | 1 | 1 | 1 |
| | Subtotal | 100 | 100 | 100 | 100 |
| Curing agent component | AD-71 | 65 | 65 | 65 | 65 |
| | KBM-603 | 5 | 5 | 5 | 5 |
| | Xylene | 10 | 10 | 10 | 10 |
| | PGM | 20 | 20 | 20 | 20 |
| | Subtotal | 100 | 100 | 100 | 100 |
| Blending ratio | Base component | 90 | 90 | 94 | 94 |
| | Curing agent component | 10 | 10 | 6 | 6 |
| Reaction rate | | 0.59 | 0.59 | 0.63 | 0.63 |
| PVC | | 38.9 | 39.1 | 41.2 | 41.4 |
| Non-volatile content (mass%) | | 68.5 | 68.6 | 68.5 | 68.5 |
| VOC (g/L) | | 436 | 437 | 447 | 448 |
| Interlayer adhesion | | 0 | 5 | 0 | 0 |
| Heat resistance | State of coating film | 10 | 10 | 10 | 10 |
| | ΔE | 5.3 | 19.8 | 2.4 | 12.7 |
| | Discoloration reduction rate | 26.7 | - | 18.7 | - |

[Table 4]

| Raw material name | Classification | Details | Manufacturer |
|---|---|---|---|
| 1007 | Epoxy resin | Bisphenol A type epoxy resin with an epoxy equivalent of 1,750 to 2,200 and a solid content of 100% | KUKDO CHEMICAL, Inc. |
| E-001-75X | Epoxy resin | Bisphenol A type epoxy resin with an epoxy equivalent of about 630 and a solid content of 75% | OHTAKE-MEISHIN CHEMICAL, CO., LTD. |
| E-834-85X | Epoxy resin | Bisphenol A type epoxy resin with an epoxy equivalent of about 300 and a solid content of 85% | OHTAKE-MEISHIN CHEMICAL, CO., LTD. |
| DOWSIL RSN0806 | Silicone resin | Methylphenyl silicone resin with a solid content of 50% and a weight average molecular weight of 200,000 to 300,000 | Dow Toray Co., Ltd. |

(continued)

| Raw material name | Classification | Details | Manufacturer |
|---|---|---|---|
| Talc F-2 | Pigment | Talc | Fukuoka Talc Co., LTD. |
| Mica 100mesh | Pigment | Mica | Fukuoka Talc Co., LTD. |
| Barico300W | Pigment | Barium sulfate | HAKUSUI TECH |
| R-930 | Coloring pigment | Titanium white | ISHIHARA SANGYO KAISHA, LTD. |
| MA-100 | Coloring pigment | Carbon black | Mitsubishi Chemical Corporation |
| Alpaste 0100M-C70 | Pigment | Aluminum paste (leafing type) with an average particle size D50 of 10 μm and a solid content of 70% | TOYO ALUMINIUM K.K. |
| KBM-403 | Silane coupling agent | 3-Glycidoxypropyltrimethoxysilane | Shin-Etsu Chemical Co., Ltd. |
| Aerosil R972 | Thixotropic agent | Hydrophobic silica | NIPPON AEROSIL CO., LTD. |
| TD-961 | Amine curing agent | Modified aliphatic polyamine; epoxy adduct of ethylenediamine; with a solid content of 50% and an active hydrogen equivalent of 356 | DIC Corporation |
| AD-71 | Amine curing agent | Modified aliphatic polyamine; epoxy adduct of diethylenetriamine; with a solid content of 50% and an active hydrogen equivalent of 290 | OHTAKE-MEISHIN CHEMICAL, CO., LTD. |
| KBM-603 | Silane coupling agent | N-2-(Aminoethyl)-3-aminopropyltrimethoxysilane | Shin-Etsu Chemical Co., Ltd. |

Reference Signs List

1 Test plate (test plate for evaluating anticorrosion property)
2 Cut

## Claims

**1.** A coating composition comprising: an epoxy resin (A); a silicone resin (B); aluminum (C); and an amine curing agent (D) .

**2.** The coating composition according to claim 1, further comprising a silane coupling agent.

**3.** The coating composition according to claim 1 or 2, which is a heat-resistant coating composition.

**4.** A coating film formed from the coating composition according to any one of claims 1 to 3.

**5.** A substrate with a coating film, comprising a substrate and the coating film according to claim 4.

**6.** A method for producing a substrate with a coating film, comprising the following steps [1] and [2]:

the step [1] of applying the coating composition according to any one of claims 1 to 3 to a substrate; and the step [2] of drying the coating composition applied on the substrate to form a coating film.

Fig. 1

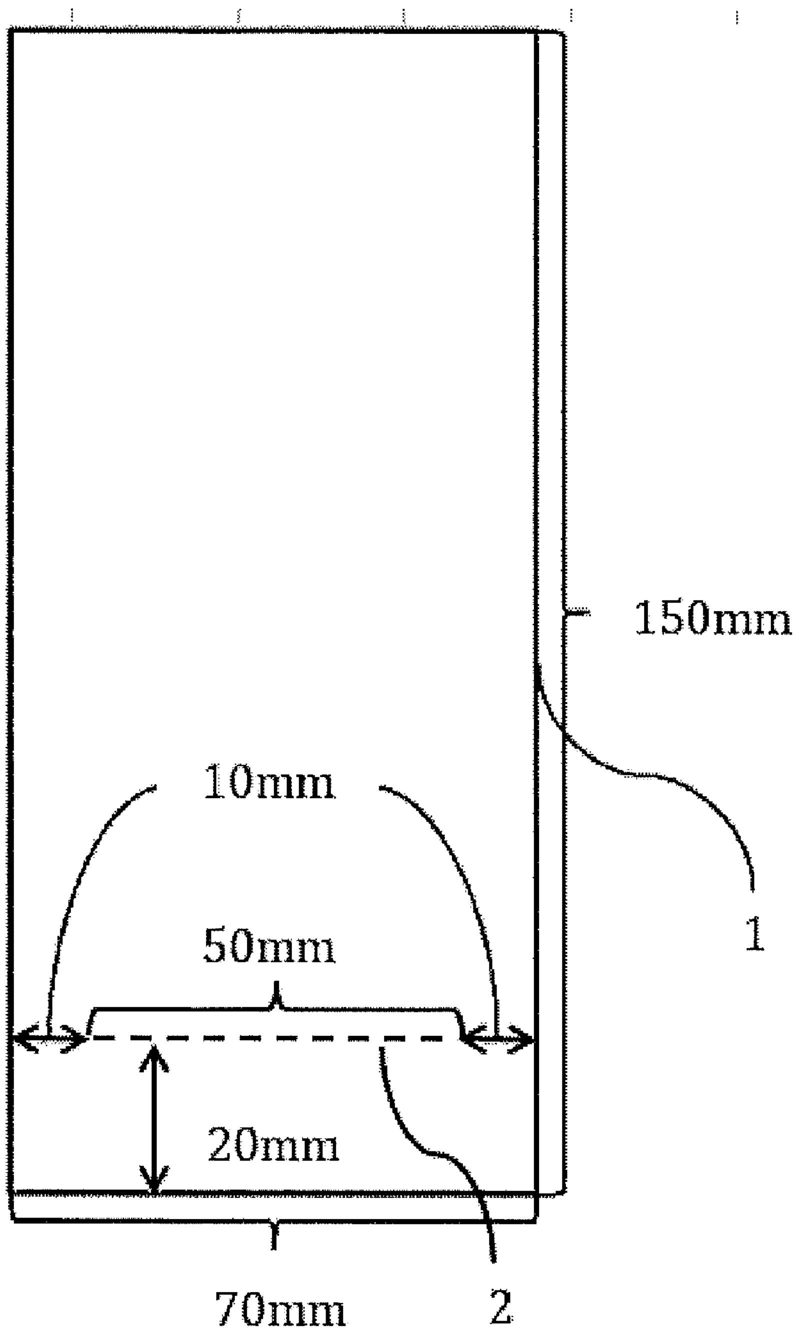

## INTERNATIONAL SEARCH REPORT

International application No.
**PCT/JP2021/030737**

**A. CLASSIFICATION OF SUBJECT MATTER**

***B05D 5/00***(2006.01)i; ***B05D 7/24***(2006.01)i; ***C09D 163/00***(2006.01)i; ***C09D 183/00***(2006.01)i; ***C09D 7/61***(2018.01)i; ***C09D 7/63***(2018.01)i
FI: C09D163/00; C09D183/00; C09D7/61; C09D7/63; B05D7/24 303E; B05D7/24 302U; B05D7/24 302Y; B05D7/24 303C; B05D5/00 E

According to International Patent Classification (IPC) or to both national classification and IPC

**B. FIELDS SEARCHED**

Minimum documentation searched (classification system followed by classification symbols)

B05D5/00; B05D7/24; C09D163/00; C09D183/00; C09D7/61; C09D7/63

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 47-3709 B1 (TOKYO SHIBAURA ELECTRIC CO., LTD.) 01 February 1972 (1972-02-01)<br>claims, examples | 1, 3-6 |
| X | JP 64-40572 A (NITTO DENKO CORP) 10 February 1989 (1989-02-10)<br>claims, example 1, etc. | 1-6 |
| X | CN 107746653 A (FOSHAN JIEZHI INFORMATION TECHNOLOGY CO., LTD.) 02 March 2018 (2018-03-02)<br>claims, examples, etc. | 1-6 |
| X | CN 107513348 A (NORTHEASTERN UNIVERSITY) 26 December 2017 (2017-12-26)<br>claims, example 2, etc. | 1, 3-6 |
| A | CN 104974562 A (ANQING LIANTAI ELECTRONIC TECHNOLOGY CO., LTD.) 14 October 2015 (2015-10-14)<br>claims, examples | 1-6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 November 2021** | **16 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2021/030737**

C. DOCUMENTS CONSIDERED TO BE RELEVANT

| Category* | Citation of document, with indication, where appropriate, of the relevant passages | Relevant to claim No. |
|---|---|---|
| A | JP 63-23975 A (KANSAI PAINT CO LTD) 01 February 1988 (1988-02-01) claims | 1-6 |
| A | JP 2020-84138 A (CHUGOKU MARINE PAINTS LTD) 04 June 2020 (2020-06-04) claims, examples | 1-6 |
| A | JP 2020-84003 A (CHUGOKU MARINE PAINTS LTD) 04 June 2020 (2020-06-04) claims | 1-6 |
| A | JP 2000-256584 A (SUMITOMO DUREZ CO LTD) 19 September 2000 (2000-09-19) claims, examples | 1-6 |
| A | JP 2008-38016 A (PETROLEUM ENERGY CENTER) 21 February 2008 (2008-02-21) claims | 1-6 |

Form PCT/ISA/210 (second sheet) (January 2015)

**INTERNATIONAL SEARCH REPORT**
**Information on patent family members**

International application No.
**PCT/JP2021/030737**

| Patent document cited in search report | | | Publication date (day/month/year) | Patent family member(s) | Publication date (day/month/year) |
|---|---|---|---|---|---|
| JP | 47-3709 | B1 | 01 February 1972 | (Family: none) | |
| JP | 64-40572 | A | 10 February 1989 | (Family: none) | |
| CN | 107746653 | A | 02 March 2018 | (Family: none) | |
| CN | 107513348 | A | 26 December 2017 | (Family: none) | |
| CN | 104974562 | A | 14 October 2015 | (Family: none) | |
| JP | 63-23975 | A | 01 February 1988 | (Family: none) | |
| JP | 2020-84138 | A | 04 June 2020 | (Family: none) | |
| JP | 2020-84003 | A | 04 June 2020 | (Family: none) | |
| JP | 2000-256584 | A | 19 September 2000 | (Family: none) | |
| JP | 2008-38016 | A | 21 February 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019006982 A
- JP H11343454 A
- JP H10259351 A